# EUROPEAN PATENT APPLICATION

(11) **EP 4 424 873 A1**
(43) Date of publication of application: **04.09.2024**
(21) Application number: 23159177.7
(22) Date of filing: 28.02.2023
(51) Int. Cl.: C25B 1/04, F01K 13/00, H02J 3/28, F02G 1/043

(54) **ENERGY RECOVERY SYSTEM AND RELATED METHOD OF RECOVERING ENERGY**

(71) Applicant: Siemens Energy Global GmbH & Co. KG, 81739 München (DE)
(72) Inventor: Craciun, Bogdan, 18069 Rostock (DE); Schumann, Sven, 91452 Wilhermsdorf (DE); Bendig, Marvin, 90513 Zirndorf (DE); Fleck, Robert, 91334 Hemhofen (DE)

(57) **Abstract**

An energy recovery system (1) for and electrolyzer (11), is provided. The system comprises a heat engine (2) being configured to be thermally connected with a hot side (3) to a waste heat output (12) of the electrolyzer, and an electrical generator (6) being configured to be functionally coupled to a crankshaft (5) of the heat engine (2), wherein the energy recovery system (1) is configured to recover electrical energy (Eₑ) generated by the electrical generator (6) from waste heat of the electrolyzer (11). Moreover, a method of recovering energy, such as by use of the mentioned energy recovery system, is described as part of the present invention.

## Description

The present invention relates to an energy recovery system suitable for and electrolyzer and a related method of recovering energy.

In the current aspiration for limiting climate change, fostering climate change mitigation technologies and maintaining in this context a reliable energy supply, there is a stringent demand for an alternative production of hydrogen, such as by use of renewable energy. It is apparent that green hydrogen production is essential in today's energy landscape and carbon emission reduction politics due to its capabilities of coupling different sectors in the energy industry, be it central or decentral energy generation, the traffic sector, and/or e.g. the chemical industry.

Hydrogen production, especially green hydrogen production such as via PEM electrolysis, or its reconversion into electrical energy is, however, requires high investments in terms of operational expenditures. Hence there is a need to further economize the ramp-up of the production capacity all over the world by reliable and low-cost technology which helps to likewise improve the overall energy balance.

In general, the state-of-the-art electrolysis, such as PEM electrolysis, has an efficiency around 70%. When implying that solely renewable energy is used for the electrolysis process, there is still a significant research focus on the electrolyzer efficiency due to the potential to save the otherwise dissipated energy, the more so as green hydrogen production capacity is expected to significantly grow in the European Union and over the world.

As a natural consequence of the electrolysis and its molecular splitting reaction, a large share of non-used (waste) energy is dissipated in the form of thermal energy which even needs to be discharged from the electrolysis process. The PEM electrolysis operates at around 60°C. Hence any generated waste heat in the process which disturbs this operating temperature needs to be conveyed away via forced cooling systems or natural heat dissipation in order to maintain the thermal stability of the equipment and a safe electrolysis process.

Other solutions which address this energy recovery potential use the waste heat for other or related processes such as water distillation for the water supply of an electrolysis. The waste heat usually needs to be released into the environment or might be fed to (other) chemical processes e.g. in the industry.

Even though approaches might be applicable according to which this rather low temperature waste heat is conveyed by heat pumps and used for other heating purposes, these approaches appear costly and practically limited and do not seem to be feasible for large-scale industrialized or off-grid electrolyzer operations.

It is, thus, an object of the present invention to provide improved means that help to retrieve waste heat from an electrolysis or fuel-cell operation at a large scale and in this way to retrieve a significant amount of the dissipated heat back in the form of usable electrical energy. Particularly, the provided solution enables efficiency improvements at large-scale, such as for grid and island operations and particularly harvesting electrical energy from the waste heat of electrolyzers.

The mentioned object is achieved by the subject-matters of the independent claims. Advantageous embodiments are subject-matter of the dependent claims.

An aspect of the invention relates to an energy recovery system for an electrolyzer or fuel cell comprising a heat engine, like a Stirling engine, and/or a heat pump or any comparable heat engine or heat pump technology being configured to be thermally connected or coupled with a hot side, such as plate or piston, to a low temperature waste heat output of the electrolyzer - or as the case may be the fuel cell - in order to convert the waste heat into mechanical energy at first.

The system further comprises an electrical generator being configured to be functionally coupled to e.g. a crankshaft of the heat engine, wherein the energy recovery system is configured to recover electrical energy generated by the electrical generator from waste heat of the electrolyzer or the fuel cell.

It is apparent that the recovery system can use the waste heat from electrolyzer plants or large-scale fuel cell units in order to reconvert e.g. 20 to 40% of the waste heat back into electrical energy which can then be used for auxiliary or back-up systems such as uninterruptible power supplies or related battery energy storage systems (BESS).

In other words, this present invention aims at a novel approach where energy produced by renewable sources such as wind, solar, tidal, or hydroelectric power can be electrolytically used and greater proportions of waste heat can be recovered, such as by retrieving it or injecting the energy back into the electrolyzer system as a useful electrical energy.

Hence, the presented solution advantageously increases the overall application's efficiency. Depending on the application, be it an energy recovery applied to an electrolysis or a fuel-cell process, there are synergies, such as to increase thermal efficiency by using existent cooling cycles or heat sources, as will be explained further below. A further advantage is that the thermal waste heat is of a constant nature which eases the application of the heat engine. This and further characteristics of the energy recovery system excel in a particularly robust functionality and broad applicability to many scenarios in today's energy industry under the current demands.

Still further, the system and the related method of recovering energy advantageously reduce the need for expensive uninterruptible power supplies (UPS) and ease an off-grid application of electrolyzers or fuel-cell plants. In general, the challenge of grid integration of electrolyzers, fuel cells or comparable devices can thereby be improved.

Moreover, the particular application of the heat engine, particularly the Stirling engine in the presented context helps to avoid expensive raw materials, such as rare earth metals and provides cost effective alternatives to state-of-the-art approaches. This helps further to level the cost of the energy produced and to match it with an initial capital expenditure investment.

In an embodiment the energy recovery system is configured to input or apply the recovered electrical energy to the (coupled) electrolyzer, e.g., in order to electrically drive a related auxiliary or backup system. Said auxiliary or back up system may relate to fans, valves, pressure controls, gas flow controls, or purity gas sensors for safety purposes, for instance. As a consequence, the mentioned auxiliary backup systems can advantageously be made independent from grid instabilities or grid failure, as the use of thermal energy in the form of waste heat is a very reliable and constant byproduct for electrolyzers. This renders the retrieved electrical energy in turn as well very reliable and easy to use.

In an embodiment the energy recovery system comprises a battery storage which can store the recovered electrical energy. This embodiment further helps to proof the application - to which the inventive energy recovery system is applied to - to instabilities and outages.

In embodiment the energy recovery system is further set up to import or apply the electrical energy back to the instance which dissipates the thermal energy, such as to the electrolyzer, like in case of a power outage and/or a grid failure. To this effect, the electrolyzer operation is significantly improved in terms of its safe startup, safe shut down and likewise made more robust and easy to align to existing grid or utility demands.

In this context, the provided inventive solution may act as a novel and broadly applicable storage environment which can improve the overall electrolyzer behavior and e.g. increase robustness of the application to which it is supplied.

In an embodiment, the system comprises a power converter which is set up to condition the (recovered) electrical energy, for instance for the mentioned energy input or for the mentioned energy storage.

In an embodiment the energy recovery system is configured to recover mechanical energy from a depressurized medium which may be present or existent in an electrolyzer plant making use of the pressurized electrolysis operation.

In an embodiment the energy recovery system is configured to and/or a product or byproduct gas flow, such as generated oxygen from the mentioned electrolysis.

By these means, the current approach excels in harvesting mechanical energy which would otherwise not be used but released to the environment.

In embodiment the system is configured to transmit the mechanical energy to the electrical generator in order to produce a supplement of electrical energy. Hence, the overall efficiency or retrieval of (recovered) energy is yet improved.

Hence, the present invention features also to use the mechanical power of the process gasses which are not used. In case of an electrolysis process this may apply to the oxygen gas stream.

In an embodiment - for transmitting the mechanical energy to the electrical generator - the system is set up to effectuate the product gas flow or depressurized medium to drive the electrical generator for efficiency improvement, such as via a fan, a rotor or a shaft.

In an embodiment, the energy recovery system is further configured to be connected to a renewable energy source, such as an (offshore) wind turbine or a photovoltaics or solar power plant. Additionally or alternatively, the system may be connected to another renewable energy source, such as a tidal, wave or hydroelectric power source.

These sources of renewable energy are promising to be directly connected to an electrolyzer unit (or vice versa) for avoiding problems regarding the grid integration of the electrolyzer plant. Thus, when electrolyzers are connected directly on-site, where the renewable energy is generated, conversion losses and further difficulties can advantageously be avoided. Still further, the renewable energy sources advantageously provide for improving the (Carnot) energy conversion efficiency by providing existent thermal reservoirs.

In an embodiment the renewable energy system is an offshore wind power station or wind park, and wherein a cold side or plate of the heat engine is connected to a cooling source of the wind power station, e.g. seawater which offers a proper cooling environment anyway to subcomponents of the proposed solution.

In an additional or alternative embodiment, the renewable energy source is a solar or a photovoltaics (PV) power plant, and wherein the hot side of the heat engine is connected to a heat source, like a solar power concentrator, of the power plant. According to this embodiment, it is possible and expedient to apply elevated temperature to subcomponents, like a hot side of the heat engine of the system and in this regard to further improve the Carnot efficiency.

A further aspect of the present invention relates to a method of recovering energy, such as by operating the system as described above.

The method comprises providing a waste heat, preferably the mentioned low temperature waste heat, from the electrolysis or fuel cell process, and transforming the collected waste heat into electrical energy with a heat engine, particularly the mentioned heat engine and a related electrical generator.

In an embodiment, the method comprises inputting the recovered electrical energy to an electrolyzer or fuel cell to drive a related auxiliary system.

In an embodiment, the method comprises storing the recovered electrical energy to retrieve the energy in case of a power outage and/or a grid failure.

In an embodiment, the method comprises recovering mechanical energy from a depressurized medium and/or a product gas flow of the electrolysis and transmitting the mechanical energy to the electrical generator in order to produce a supplement of electrical energy.

In embodiment the heat engine is a Stirling engine and a cold side of the Stirling engine is cooled by a cooling source of a cooling cycle of a wind power station, such as a seawater cooling environment of an offshore platform or similar.

In an embodiment, the heat engine is a Stirling engine and a hot side of the Stirling engine is heated by a heat source of a solar power plant, like a thermal collector or even a solar power concentrator.

Apparently advantages and embodiments relating to the described and/or the described energy recovery system apply and are valid or pertain likewise to the method of recovering energy as described.

Further, features and advantageous embodiments become apparent from the following description of the exemplary embodiment in connection with the Figures.
Figure 1 shows a schematic outline of an inventive energy recovery system coupled to an electrolyzer.
Figure 2 shows a schematic outline of the energy recovery system in an alternative embodiment.
Figure 3 shows a schematic outline of the energy recovery system connected to a renewable energy source.
Figure 4 shows a schematic outline of the energy recovery system in an operational mode including the recovery of mechanical energy.
Figure 5 shows a schematic outline of the inventive energy recovery system in multi-feature embodiment.
Figure 6 indicates a schematic flow chart of inventive method steps.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

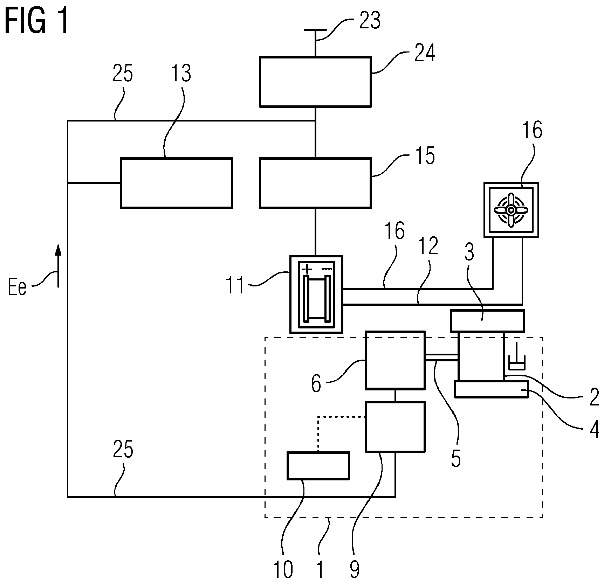

Figure 1 indicates in a schematic an operational mode of the inventive energy recovery system 1 coupled to an electrolyzer or electrolyzer plant 11.

The energy recovery system 1 comprises a heat engine, preferably in the form of a Stirling engine 2 or any other heat pump technology. The Stirling engine 2 is configured and shown in Figure 1 to be coupled with a hot side 3, plate or piston, to a low temperature waste heat output (as indicated with reference 12).

Said waste heat output 12 may relate to the electrolyzer system 11 or to a comparable source of thermal waste energy. By way of the Stirling engine 2, the waste heat can expediently and reliably be converted into mechanical energy, as a crankshaft 5 of the Stirling engine 2 is driven by the connection of the Stirling engine plates to different thermal reservoirs. As compared to the hot side 3, a cold side 4 or plate of the Stirling engine 2 may be held in thermal communication to a colder environment.

The inventive energy recovery system further comprises an electrical generator 6 which is coupled to the crankshaft 5. Hence, the system 1 is configured to recover electrical energy - by way of the electrical generator 6 - from the waste heat of the electrolyzer 11 or a comparable facility.

The electrical generator 6 is preferably, a favorable or convenient generator, like a so-called squirrel cage generator. Preferably and in favor of an economic solution, no synchronous machines or expensive or permanent-magnet-based generators are used.

It is further indicated in Figure 1, that the depicted electrolyzer 11 is equipped with a conventional chiller, or cooling facility 16 by a which an excess thermal heat is discharged from the electrolysis process and usually released into the environment (not explicitly indicated). With the aid of the inventive concept, said waste heat can be used to drive the Stirling motor 2 and - in this way - to retrieve at least a significant amount of the "waste" energy for recovery.

The inventive power recovery system 1 may further comprise a power converter 9 which is expediently set up to condition the energy generated by the generator for the further usage of electrical energy. To this effect, the system may as well comprise a controller 10 which helps to reapply the energy in the most efficient way and tailored to the related consumers which may be driven by the recovered electrical energy (cf. reference numerals Eₑ) and for which the recovered energy is foreseen (cf. further below).

For the operation of an auxiliary consumer or auxiliary system 13, the recovered electrical energy Eₑ may be conveyed via power cables 25 via which the electrolyzer 11 is electrically connected. The auxiliary system 13 may more specifically relate to auxiliary consumers for the electrolyzer, such as fans, valves, pressure controls or sensor technology or related drives.

A proper and reliable (grid-independent) operation of such auxiliaries can favorably also ensure a safe start-up and a safe shutdown of the auxiliaries. The concept has thus the capability to function per se as a uninterrupted power supply system (UPS).

Via the mentioned cables 25, the electrolyzer 11 may as well be connected to an electrical protection 24 and a main power supply 15. In the upper part of Figure 1, it is further shown that the electrolyzer 11 may be set up to be operated from power of the utility grid or off-grid supply 23.

Without departing from the inventive concept, the inventive energy recovery system 1 may as well be coupled and utilized such that waste heat of a fuel cell plant is used for the energy recovery instead of the electrolyzer system as indicated throughout the Figures.

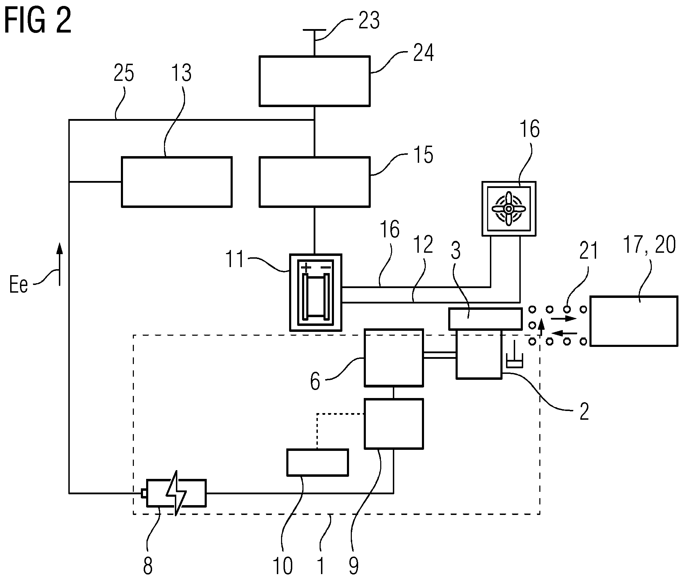

As a difference to the embodiment of Figure 1, Figure 2 further indicates that a battery storage 8, such as a BESS storage may be switched or connected to the power converter 9 in order to store the generated and/or converted (recovered) electrical energy Eₑ.

Moreover, it is apparent from the right side of Figure 2 that the system 1 is thermally connected, such as coupled to a heat source of a solar or photovoltaics power plant 20. That is to say, the Stirling engine to is thermally connected with its hot side 3 to an elevated temperature or waste heat as may be present in the vicinity of solar power plants or related controls or even solar power concentrators. By the conjunction of the Stirling engine's hot side 3 temperatures of significantly above 60° C, such as 100°C, boost the temperature difference and thereby effectuate to increase the Carnot efficiency of the energy recovery. This holds particularly in situations such as deserts, tropical regions, or regions with strong solar exposure in which the thermal solar system can increase the temperature in the thermal circuits and increase the energy recovery efficiency. Said "thermal boost" effects can even better be exploited to the benefit of the energy conversion rate in concentrated solar power plants.

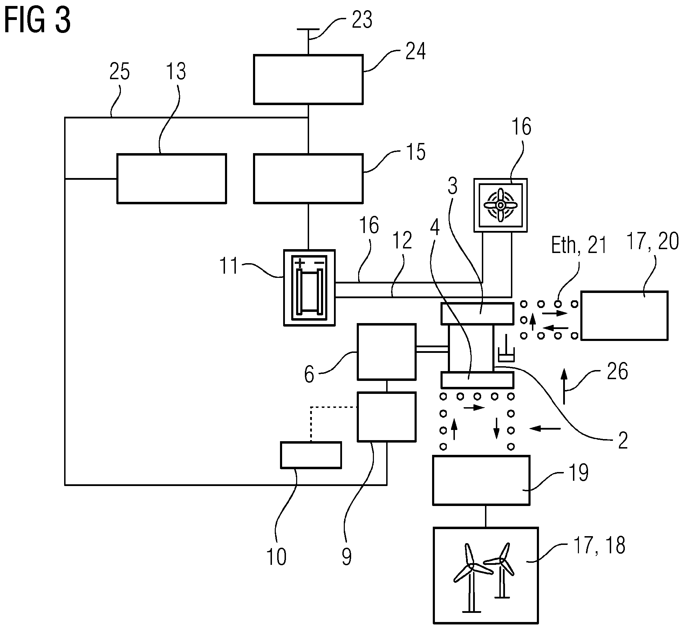

By way of Figure 3 it is apparent that the system 1 is additionally connected to another renewable energy source 17, namely a wind turbine, more particularly an offshore wind power station 18. Expediently, the cold side 4 of the Stirling engine 2 is in thermal communication to a cooling source 19 of said wind power station 18. Meanwhile, the hot side 3 is thermally connected to a heat source (cf. reference 21) in Figure 3 of the solar plant 20. This functional connection helps to maintain a large temperature difference between the hot side 3 and the cold side 4 in favor of a great energy conversion efficiency.

Without loss of generality, the inventive concept may (although this is not specifically indicated in the Figures) be applied to any other type of renewable energy sources 17, such as tidal, wave or hydroelectric power plants and its related expedient cooling or heating environments.

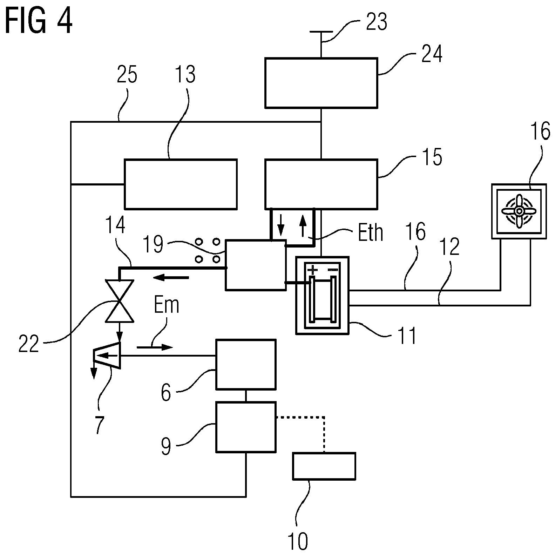

In addition to the described embodiment(s), Figure 4 indicates a separate feature which contributed to the present invention. In the central part of the scheme, another cooling source 19 is depicted which is connected e.g. to the anode of the electrolyzer 11, and to a further "waste" energy of the electrolysis, i.e. an oxygen or byproduct gas flow (indicated with reference 14) and/or the potential to harvest mechanical energy from a pressurized operational mode of the electrolysis.

In conventional approaches, the (pressurized) oxygen gas is usually as well released into the environment and related mechanical energy remains ineffective and unused. According to the present invention, the pressurized oxygen and/or air - which needs to be evacuated - is exploited as a mechanical Eₘ energy source and transformed back into electrical energy Eₑ. This may be facilitated by a depressurization valve or by related "transmitters" or "transformers", like e. g. fans rotors or turbines 22 which apply the mechanical energy as well to the electrical generator 6 and increase its energy conversion efficiency accordingly. As an advantage of this setup, no motors or pumps are actually needed to guide the oxygen away from the electrolyzer unit 11. Instead, the process is capable to maintain itself.

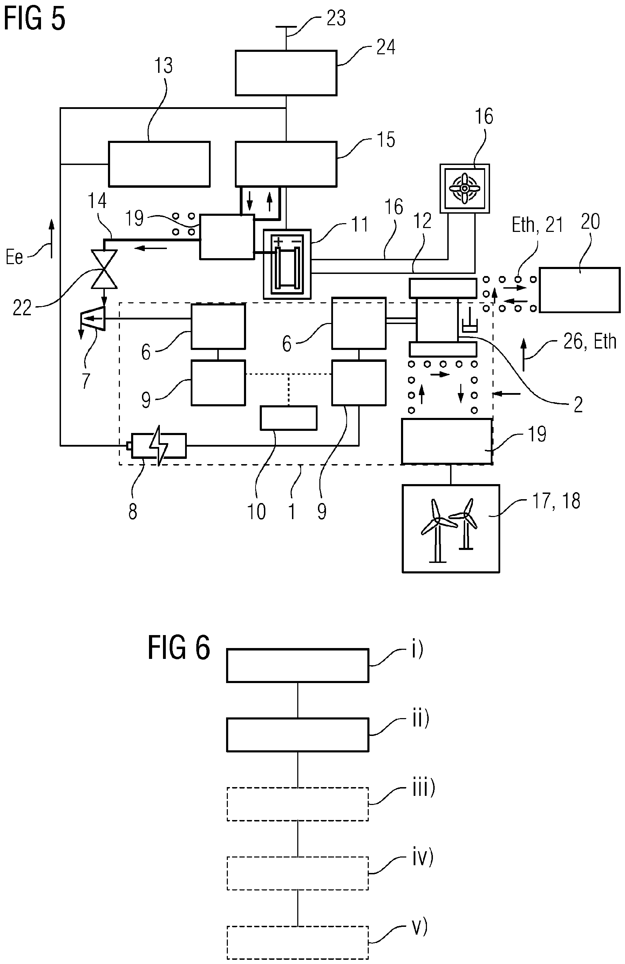

It is further shown in Figure 4 (and Figure 5) that the oxygen gas flow 14 can - once produced - be cooled, e.g. fed back into a pipe (not explicitly indicated), subsequently cool for example the power supply 15, and then be cooled again in seawater 19 like at 5 to 10°C, and then depressurized or driving the generator 6 or a related shaft for power generation and energy recovery.

Figure 5 indicates an operational mode of the presented solution, wherein a plurality of inventive features, i.e. the connection to two different types of renewable energy source 17 as well as the exploitation of mechanical excess energy Eₘ e.g. via the oxygen gas flow, are embodied. Still further, the storage functionality as well as the providing of the auxiliary consumers with recovered energy are featured.

As a difference to the above-described embodiments, the energy recovery system 1 shown in Figure 5 shows the controller 10 to be functionality connected to both indicated power converters 9. Each of the latter is connected to a respective electrical generator 6, wherein one electrical generator 6 is coupled to the Stirling engine 2 (as shown on the right); and one electrical generator 6 is connected to the rotor or turbines 7 (shown on the left). In this configuration, the controller 10 is advantageously set up to manage the recovery of energy from both partial systems (Eₜₕ, Eₘ) in the inventive way.

Figure 6 indicates - by way of a simple schematic flowchart - the inventive method steps as may have been described already in parts above. The inventive method is a method of recovering energy, e.g. by operating the system 1 as described above.

The method particularly comprises, i), providing a waste heat Eₜₕ from an electrolysis process.

The method further comprises, ii), transforming the collected waste heat into electrical energy Eₑ with a heat engine 2 and the electrical generator 6.

The method may further comprise, iii), inputting the recovered electrical energy Eₑ to the electrolyzer 11 in order to drive a related auxiliary system 13 of the electrolyzer 11 (the dashed squares indicate that these method steps are not necessarily essential to the present invention).

The method may further comprise, iv), storing the recovered electrical energy Eₑ to retrieve the energy in case of a power outage and/or a grid failure.

The method may further comprise, v), recovering mechanical energy Eₘ from a depressurized medium and/or a product gas flow 14 of the electrolysis and transmitting the mechanical energy Eₑ to the electrical generator 6 in order to produce a supplement of electrical energy Eₑ.

According to the inventive method - as indicated above - the heat engine 2 is a Stirling engine and wherein a cold side 4 of the Stirling engine 2 is cooled by a cooling source 19 e.g. of a wind power station 18. Likewise, as described by way of Figures 2, 3 and 5 the hot side 3 of the Stirling engine 2 is heated by a heat source 21 of a solar power plant 20.

In other words, the present invention intends to use the waste heat (thermal energy) and use the Stirling engine 2 to convert the thermal energy Eₜₕ into mechanical energy Eₘ. The mechanical energy Eₘ is then transformed into electrical energy Eₑ by means of an electrical generation 6. The electrical energy Eₑ is preferably conditioned by the (power) converter 10 which injects into back into the electrolyzer supply system 11 or 13. In addition to the thermal energy conversion process, the invention intends to use the mechanical power of the process gases 14 which are - otherwise - not used in the system. This applies to the oxygen gas stream which can provide the proper input of mechanical energy Eₘ to a connected generator 6 or can supply the mechanical power to the same shaft or gear of the generator 6. Hence, mechanical power can be offered by two means; one is the flow of gas 14 and the other one is e.g. from depressurization (cf. numeral 22). Both mechanical energies may be input and used as a source for recovering energy in the selected configuration.

## Claims

1. An energy recovery system (1) for and electrolyzer (11), comprising
- a heat engine (2) being configured to be thermally connected with a hot side (3) to a waste heat output (12) of the electrolyzer, and
- an electrical generator (6) being configured to be functionally coupled to a crankshaft (5) of the heat engine (2), wherein the energy recovery system (1) is configured to recover electrical energy (Eₑ) generated by the electrical generator (6) from waste heat of the electrolyzer (11).

2. The energy recovery system (1) according to claim 1, wherein the energy recovery system (1) is configured to input the recovered electrical energy (Eₑ) to the electrolyzer (11), e. g., to drive a related auxiliary system (13) of the electrolyzer (11).

3. The energy recovery system (1) according to claim 1 or 2, wherein the energy recovery system (1) comprises a battery storage (8) which can store the recovered electrical energy (Eₑ), and wherein the system (1) is further set up to apply electrical energy (Eₑ) to the electrolyzer (11) only in case of a power outage and/or a grid failure.

4. The energy recovery system (1) according to one of the previous claims, wherein the energy recovery system (1) is configured to recover mechanical energy (Eₘ) from a depressurized medium and/or product gas flow (14) of the electrolyzer (11).

5. The energy recovery system (1) according to claim 4, wherein the system (1) is configured to transmit the mechanical energy (Eₘ) to the electrical generator (6) to produce a supplement of electrical energy (Eₑ).

6. The energy recovery system (1) according to claim 4 or 5, wherein the system (1) is set up to effectuate the product gas (14) flow to drive the electrical generator (6), such as via a fan, a rotor or a shaft (7).

7. The energy recovery system (1) according to one of the previous claims, wherein the system (1) is further configured to be connected to a renewable energy source (17), such as a wind turbine (18) or a photovoltaics or solar power plant (20) .

8. The energy recovery system (1) according to claim 7, wherein the renewable energy source (17) is an offshore wind power station (18) and wherein a cold side (4) of the heat engine (2) is connected to a cooling source (19) of the wind power station (18).

9. The energy recovery system (1) according to claim 7 or 8, wherein the renewable energy source (17) is a solar power plant (20) and wherein the hot side (3) of the heat engine (2) is connected to a heat source (21) of the power plant.

10. A method of recovering energy, e. g. by operating the system (1) according to one of the previous claims, comprising the steps of:
- (i) providing a waste heat (Eₜₕ) from an electrolysis process,
- (ii) transforming the collected waste heat into electrical energy (Eₑ) with a heat engine (2) and an electrical generator (6).

11. The method according to claim 10, comprising inputting (iii) the recovered electrical energy (Eₑ) to an electrolyzer (11) to drive a related auxiliary system (13) of the electrolyzer (11).

12. The method according to claim 10 or 11, comprising storing (iv) the recovered electrical energy (Eₑ) to retrieve the energy in case of a power outage and/or a grid failure.

13. The method according to one of claims 10 to 12, comprising recovering (v) mechanical energy (Eₘ) from a depressurized medium and/or a product gas flow (14) of the electrolysis and transmitting the mechanical energy (Eₑ) to the electrical generator (6) to produce a supplement of electrical energy (Eₑ).

14. The method according to one of claims 10 to 13, wherein the heat engine (2) is a Stirling engine and wherein a cold side (4) of the Stirling engine (2) is cooled by a cooling source (19) of wind power station (18).

15. The method according to one of claims 10 to 14, wherein the heat engine (2) is a Stirling engine and wherein a hot side (3) of the Stirling engine (2) is heated by a heat source (21) of a solar power plant (20).
